(19)

Europäisches
Patentamt
European
Patent Office
Office européen
des brevets

(11) **EP 2 386 611 A1**

(12) **EUROPEAN PATENT APPLICATION**

(43) Date of publication:
**16.11.2011 Bulletin 2011/46**

(51) Int Cl.:
**C09D 11/00** (2006.01)

(21) Application number: **11158690.5**

(22) Date of filing: **17.03.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.04.2010 US 326320 P**

(71) Applicants:
• **Kabushiki Kaisha Toshiba
Tokyo 105-8001 (JP)**
• **Toshiba TEC Kabushiki Kaisha
Tokyo 141-8664 (JP)**

(72) Inventors:
• **Hara, Takafumi
Shinagawa-ku Tokyo 141-8664 (JP)**
• **Akiyama, Ryozo
Shinagawa-ku Tokyo 141-8664 (JP)**
• **Yoshida, Maiko
Shinagawa-ku Tokyo 141-8664 (JP)**
• **Tonohiro, Chie
Shinagawa-ku Tokyo 141-8664 (JP)**
• **Kubota, Atsushi
Shinagawa-ku Tokyo 141-8664 (JP)**

(74) Representative: **Gendron, Vincent Christian et al
S.A. Fedit-Loriot
38, avenue Hoche
75008 Paris (FR)**

(54) **Aqueous pigment ink**

(57) According to one embodiment, an aqueous pigment ink includes water, a pigment, and a water-soluble polymeric compound. The pigment is contained in the aqueous pigment ink in an amount of less than 5 wt%. The aqueous pigment ink has viscosities (mPa·s) measured at 25°C using a cone-plate type viscometer and satisfying the following relationships:

$$0 \leq (V_B - V_A)/V_B < 0.05$$

$$V_C/V_A \geq 1.5$$

$$3 \text{ mPa·s} \leq V_A \leq 15 \text{ mPa·s}$$

wherein $V_A$ represents a viscosity measured at a rotation speed of 50 rpm, $V_B$ represents a viscosity measured at a rotation speed of 2.5 rpm, and $V_C$ represents a viscosity measured at a rotation speed of 50 rpm after adding calcium chloride in an amount of 0.5 wt% of the aqueous pigment ink.

EP 2 386 611 A1

**Description**

FIELD

Embodiments described herein relate generally to an aqueous pigment ink.

BACKGROUND

In an aqueous pigment ink in which a pigment is dispersed in a medium containing water, a moisture retaining agent for suppressing evaporation of water is generally contained. A viscosity adjusting agent for suppressing an increase in viscosity due to evaporation of water is also generally contained in an aqueous pigment ink.

As the moisture retaining agent, a polyhydric alcohol or the like is used, and as the viscosity adjusting agent, a water-soluble organic solvent is used. The polyhydric alcohol is well compatible with cellulose which is a main component of a paper medium, and the water-soluble organic solvent has high penetrability into paper. Due to this, the aqueous pigment ink easily penetrates into the inside of a paper medium, and the pigment in the ink is difficult to remain on the surface of the paper medium. In order to obtain an aqueous pigment ink capable of forming an image having a desired density on a paper medium, it was necessary to incorporate a pigment in an amount determined by considering the penetration into the paper medium.

In order to reduce the production cost of the ink, it is required to reduce the content of the pigment. However, an aqueous pigment ink in which the content of a pigment is low and which is capable of forming an image having a sufficient density on a paper medium is not obtained yet.

DETAILED DESCRIPTION

In general, according to one embodiment, an aqueous pigment ink includes water, a pigment, and a water-soluble polymeric compound. The pigment is contained in the aqueous pigment ink in an amount of less than 5 wt%. The aqueous pigment ink has viscosities (mPa.s) measured at 25°C using a cone-plate type viscometer and satisfying the following relationships:

$$0 \leq (V_B - V_A)/V_B < 0.05$$

$$V_C/V_A \geq 1.5$$

$$3 \text{ mPa·s} \leq V_A \leq 15 \text{ mPa·s}$$

wherein $V_A$ represents a viscosity measured at a rotation speed of 50 rpm, $V_B$ represents a viscosity measured at a rotation speed of 2.5 rpm, and $V_C$ represents a viscosity measured at a rotation speed of 50 rpm after adding calcium chloride in an amount of 0.5 wt% of the aqueous pigment ink.

Hereinafter, embodiments will be specifically described.

If the penetration of a pigment into the inside of a paper medium can be suppressed when an aqueous pigment ink is ejected onto the paper medium, an image density on the paper medium can be increased. The penetration of the ink into the inside of the paper medium is associated with the viscosity of the ink and when the viscosity of the aqueous pigment ink is increased, the penetration of the ink into the paper medium is suppressed. Consequently, the pigment in the aqueous pigment ink remains near the surface of the paper medium, and the density of the image obtained can be increased.

Further, in order to stably eject the ink from an inkjet print head, the aqueous pigment ink is required to have a small difference between the viscosity when the head is driven and the viscosity when the ink is left stand. That is, an ink having low dependence of viscosity on shearing stress can be stably ejected from the head.

As a result of intensive studies made by focusing on these points, the present inventors found the following relationship with respect to the viscosity of the aqueous pigment ink. The viscosity is a value measured at 25°C using a cone-plate type viscometer.

$$0 \leq (V_B - V_A)/V_B < 0.05 \qquad \text{Formula 1}$$

$$V_C/V_A \geq 1.5 \qquad \text{Formula 2}$$

$$3 \text{ mPa·s} \leq V_A \leq 15 \text{ mPa·s} \qquad \text{Formula 3}$$

In the formulae 1 to 3, $V_A$ represents a viscosity measured at a rotation speed of 50 rpm. $V_A$ is the viscosity of the aqueous pigment ink when the applied shearing stress is high, for example, when the head is driven. The viscosity of the aqueous pigment ink during the time from when the ink is ejected from the head to when the ink comes into contact with the paper medium corresponds to $V_A$. The viscosity of an inkjet ink at 25°C is generally in the range of 3 to 15 mPa·s. Since $V_A$ is defined to be within the range of 3 to 15 mPa·s as shown in the formula 3, the aqueous pigment ink according to this embodiment can be used for inkjet recording. The aqueous pigment ink according to this embodiment may be used in writing implements such as pens.

In the formula 1, $V_B$ represents a viscosity measured at a rotation speed of 2.5 rpm. $V_B$ is the viscosity of the aqueous pigment ink when the applied shearing stress is low, for example, when the ink is left stand. In general, in the case of an inkjet ink, the following formula is satisfied: $V_B \geq V_A$. The formula 1 indicates that a difference in viscosity due to a difference in shearing stress is less than 5%. Therefore, the aqueous pigment ink that satisfies the relationship represented by the formula 1 has low dependence of viscosity on shearing stress.

If the difference in viscosity due to a difference in shearing stress is 5% or more, it becomes difficult to eject the ink from an inkjet print head. When the ink having a difference in viscosity due to a difference in shearing stress of 5% or more is used in a writing implement, a disadvantage in which the ink is solidified and stuck to the tip of a pen, or the like occurs. In order to avoid such a disadvantage, in this embodiment, $(V_B-V_A)/V_B$ is defined to be less than 0.05. $(V_B-V_A)/V_B$ is preferably 0.042 or less.

$V_C$ represents a viscosity obtained by performing the measurement of the aqueous pigment ink containing 0.5 wt% of calcium chloride at a rotation speed of 50 rpm.

A paper medium usually contains a calcium ion. The present inventors created a simulated condition of the aqueous pigment ink immediately after the ink comes into contact with the paper medium by blending 0.5 wt% of calcium chloride in the aqueous pigment ink. $V_C$ corresponds to the viscosity of the aqueous pigment ink after the ink comes into contact with the paper medium.

As $V_C/V_A$ is larger, an ink is more difficult to penetrate into a paper medium. $V_C/V_A$ is preferably 2 or more. The upper limit of $V_C$, although it depends on the viscosity of the ink itself, is about 60 mPa·s, and therefore, the upper limit of $V_C/V_A$ is calculated to be about 20.

The viscosity of the aqueous pigment ink which satisfies the relationship represented by the above formula 2 is configured such that when the ink comes into contact with the paper medium, the viscosity thereof is increased to a value which is 1.5 times or more of the viscosity before the ink comes into contact with the paper medium. It means that by the reaction with a calcium ion in the paper medium, the gelation of the aqueous pigment ink is accelerated and the viscosity is increased. In order to form an image having a high density on the paper medium by suppressing the penetration of the ink into the paper medium, $V_C/V_A$ should be 1.5 or more.

When the aqueous pigment ink according to this embodiment is ejected onto the paper medium, the pigment does not penetrate into the paper medium and remains near the surface, and almost all of the pigment in the ink contributes to color development. Therefore, even if the amount of the pigment to be contained in the ink is decreased as compared with a conventional aqueous pigment ink, an image having a sufficient density can be formed. Moreover, the aqueous pigment ink according to this embodiment has low dependence of viscosity on shearing stress, and therefore, the ink can be stably ejected from the inkjet print head.

Incidentally, the "paper medium" as used herein generally refers to a medium made of paper to be used for printing. The paper medium is broadly divided into coated paper coated with a material for increasing print properties such as art paper or coat paper and non-coated paper to be used for utilizing the properties of paper itself. The paper medium is applied to a variety of uses such as books, documents, newspapers, packages, printer sheets, etc. The paper medium also includes corrugated cardboard boxes, containers made of paper, and thick paper such as cardboard. For example, so-called plain paper such as copy paper to be used in a copier or a printer for office or home use is a typical paper medium.

The viscosity of the aqueous pigment ink according to this embodiment is increased when the ink comes into contact with the paper medium. Such a property was obtained by blending a water-soluble polymeric compound which is reacted with a calcium ion to form a gel. The water-soluble polymeric compound which exhibits a desired action and functions as a so-called gelation agent working on paper was found by the present inventors.

Therefore, the aqueous pigment ink according to this embodiment contains a water-soluble polymeric compound in addition to water and a pigment.

As water, for example, pure water or ultrapure water can be used. The amount of water in the aqueous pigment ink is not particularly limited, however, when water is excessively contained, curling or the like is caused, and there is a possibility that the paper medium is deformed. If the amount of water is less than 70 wt% of the total amount of the ink, deformation of the paper medium can be avoided. The amount of water in the aqueous pigment ink is more preferably less than 60 wt%, and most preferably less than 50 wt%.

In the aqueous pigment ink, a viscosity adjusting agent is preferably contained in addition to water. By blending a viscosity adjusting agent in the ink, the storage stability of the ink can be increased and also the moisture retaining property and the defoaming property of the ink can be increased. Also, the ejection stability of the ink from the inkjet print head is further more increased.

Examples of the viscosity adjusting agent include polyethylene glycol, glycerin, and glycol ether. The amount of the viscosity adjusting agent in the aqueous pigment ink according to this embodiment can be set to, for example, about 1 to 50 wt%. When the viscosity adjusting agent is contained in the ink in an amount within the above range, a desired effect can be obtained without causing any disadvantage.

As the pigment, for example, an azo pigment (such as an azo lake pigment, an insoluble azo pigment, a condensed azo pigment, or a chelate azo pigment), a polycyclic pigment (such as a phthalocyanine pigment, a perylene pigment, a perinone pigment, an anthraquinone pigment, a quinacridone pigment, a dioxazine pigment, a thioindigo pigment, an isoindolinone pigment, or a quinophthalone pigment), a dye chelate (such as a basic dye type chelate, or an acid dye type chelate), a nitro pigment, a nitroso pigment, aniline black, or the like can be used.

Specific examples of the carbon black which is used as the black ink include No. 2300, No. 900, MCF88, No. 33, No. 40, No. 45, No. 52, MA7, MA8, MA100, and No. 2200B (all of which are manufactured by Mitsubishi Chemical Corporation), Raven 5750, Raven 5250, Raven 5000, Raven 3500, Raven 1255, and Raven 700 (all of which are manufactured by Columbian Chemicals Company), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (all of which are manufactured by Cabot Corporation), and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all of which are manufactured by Degussa AG).

Specific examples of the pigment which is used in the yellow ink include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 128, C.I. Pigment Yellow 129, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185.

Specific examples of the pigment which is used in the magenta ink include C.I. Pigment Red 5, C.I. Pigment Red 7, C.I. Pigment Red 12, C.I. Pigment Red 48 (Ca), C.I. Pigment Red 48(Mn), C.I. Pigment Red 57 (ca), C.I. Pigment Red 57:1, C.I. Pigment Red 112, C.I. Pigment Red 122, C.I. Pigment Red 123, C.I. Pigment Red 168, C.I. Pigment Red 184, C.I. Pigment Red 202, and C.I. Pigment Violet 19.

Specific examples of the pigment which is used in the cyan ink include C.I. Pigment Blue 1, C.I. Pigment Blue 2, C.I. Pigment Blue 3, C.I. Pigment Blue 15:3, C.I. Pigment Blue 15:4, C.I. Pigment Blue 15:34, C.I. Pigment Blue 16, C.I. Pigment Blue 22, C.I. Pigment Blue 60, C.I. Vat Blue 4, and C.I. Vat Blue 60.

It is preferred that the pigment has an average particle diameter in the range of about 10 to 300 nm. If the average particle diameter is in the above range, when the pigment is used in an inkjet recording apparatus, clogging of the print head is not caused. It is more preferred that the pigment has an average particle diameter in the range of about 10 to 200 nm.

The average particle diameter of the pigment can be determined using a particle size distribution analyzer employing a dynamic light scattering method. Examples of the particle size distribution analyzer include HPPS (Malvern Instruments Ltd.).

The pigment can be used in a state of a pigment dispersion. The pigment dispersion can be prepared by, for example, dispersing the pigment in water, an alcohol, or the like using a dispersant. Examples of the dispersant include surfactants, water-soluble resins, and water-insoluble resins. Alternatively, the pigment may be used in the form of a self-dispersible pigment.

The self-dispersible pigment is a pigment, which can be dispersed in water or the like without using a dispersant, and to which at least one functional group selected from a carbonyl group, a carboxyl group, a hydroxyl group, and a sulfone group or a salt thereof is bound through a surface treatment. Examples of the surface treatment include a vacuum plasma treatment, a diazo coupling treatment, and an oxidation treatment. The self-dispersible pigment is obtained by grafting a functional group or a molecule containing a functional group on the surface of a pigment through a given surface treatment.

As compared with a pigment in other pigment dispersion, the self-dispersible pigment has excellent dispersion stability in water and also has a strong adsorption force to the paper medium. Therefore, the ink containing such a self-dispersible pigment can form a higher quality image.

In this embodiment, the amount of the pigment in the aqueous pigment ink is defined to be less than 5 wt%. If the amount is 5 wt% or more, the cost cannot be reduced and also clogging of the inside of the head or the like is likely to be caused. The amount of the pigment is more preferably less than 4 wt%, and most preferably less than 3 wt% of the aqueous pigment ink. The pigment is generally contained in the aqueous pigment ink in an amount of 1.5 wt% or more.

In the aqueous pigment ink according to this embodiment, a water-soluble polymeric compound is contained. When a water-soluble polymeric compound is contained in the ink, the dependence of the ink on shearing stress is generally increased. The water-soluble polymeric compound to be contained in the aqueous pigment ink according to this embodiment accelerates the gelation of the ink by reacting with a calcium ion in the paper medium without increasing the dependence of the ink viscosity on shearing stress.

Such a water-soluble polymeric compound is, for example, a low methoxyl pectin (hereinafter referred to as "LM pectin"). The LM pectin is a pectin in which the degree of esterification of a galacturonic acid moiety is less than 50% and has excellent reactivity with a calcium ion in the paper medium (gelation property).

This is because the reaction with a calcium ion is caused by a carboxyl group of a uronic acid moiety. The content of the LM pectin in the aqueous pigment ink is defined to be more than 0.02 wt% but less than 0.3 wt%. If the amount of the LM pectin is too small, the reaction with a calcium ion does not sufficiently occur to accelerate the gelation of the ink. Therefore, an effect of suppressing the penetration of the ink into the inside of the paper medium cannot be obtained. On the other hand, if the amount of the LM pectin is too large, the viscosity of the ink is increased. Therefore, $V_A$ and $V_B$ are relatively increased, and $(V_B-V_A)/V_B$ becomes 0.05 or more. That is, the ink does not satisfy the above formula 1. It is preferred to blend the LM pectin in a suitable amount depending on the weight average molecular weight of the LM pectin and the like. The weight average molecular weight of the LM pectin is not particularly limited.

The amount of the LM pectin is preferably less than 0.2 wt%, and more preferably less than 0.15 wt% of the aqueous pigment ink.

As the LM pectin, a natural compound is preferred, however, it is not limited thereto. For example, there is no problem even if a polyuronic acid complex compound synthesized as a desired uronic acid sequence such that it controls gelation property and the like is used.

The aqueous pigment ink according to this embodiment can be prepared by, for example, mixing a pigment dispersion and water and then adding a predetermined amount of a water-soluble polymeric compound thereto.

In order to adjust the properties of the ink such as ejection performance and penetrability to optimum conditions, a surfactant may be blended in the ink.

Examples of the surfactant include polyoxyethylene alkyl ethers, polyoxyalkylene alkyl ethers, polyoxyethylene polycyclic phenyl ethers, polyoxyalkylene polycyclic phenyl ethers, glycerin fatty acid esters, and dimethylolheptane EO adducts.

Further, acetylene glycol-based surfactants or fluorosurfactants can also be used. Examples of the acetylene glycol-based surfactant include 2,4,7,9-tetramethyl-5-decyne-4,7-diol, 3,6-dimethyl-4-octyne-3,6-diol, and 3,5-dimethyl-l-hexyn-3-ol. Specific examples thereof include Surfynol 104, 82, 465, 485, and TG (all of which are manufactured by Air Products, Inc.).

Examples of the fluorosurfactant include perfluoroalkyl ethylene oxide adducts, perfluoroalkyl amine oxides, perfluoroalkyl carboxylates, and perfluoroalkyl sulfonates. Specific examples thereof include Megafac F-443, F-444, F-470, and F-494 (all of which are manufactured by Dainippon Ink Chemical Industries), Novec FC-430 and FC-4430 (all of which are manufactured by 3M Co., Ltd.), and Surfron S-141, S-145, S-111N, and S-113 (all of which are manufactured by Seimi Chemicals Co., Ltd.).

If such a surfactant is contained in the ink in an amount of about 1 part by weight based on 100 parts by weight of the ink, a desired effect can be exhibited without causing any disadvantage.

If desired, an additive such as a pH adjusting agent, an antiseptic or antifungal agent can be blended in the ink. Examples of the pH adjusting agent include potassium dihydrogen phosphate, disodium hydrogen phosphate, and sodium hydroxide.

As the antiseptic or antifungal agent, for example, sodium benzoate, sodium pentachlorophenol, sodium 2-pyridinethiol-1-oxide, sodium sorbate, sodium dehydroacetate, 1,2-dibenzisothiazolin-3-one (for example, Proxel CRL, Proxel BDN, Proxel GXL, Proxel XL-2, or Proxel TN, all of which are registered trademarks and manufactured by Imperial Chemical Industries Limited), or the like can be used.

By blending such an additive in the ink, the quality of the obtained image or storage stability is further improved.

Further, an additive suitable for the intended use for improving properties as the ink, for example, a penetrant or the like can be blended in the ink. The blending amount of such an additive may be appropriately selected within a range in which the additive is dissolved or dispersed in water. For example, a sparingly soluble additive can be used in combination with a solubilizing agent or the like. Any additive is desirably added within a range in which the dispersion stability of the above-mentioned pigment is not deteriorated.

Hereinafter, specific examples of the aqueous pigment ink will be shown.

An aqueous pigment ink was prepared by mixing the respective components according to a formulation shown in the following Table 1. The numerical values in the following Table 1 indicate the parts by mass of the respective components. As a surfactant, Surfynol 465 (manufactured by Nisshin Chemical Industry Co., Ltd.) was used. As the LM pectin, GENU pectin type LM-104AS-J (manufactured by SANSHO Co., Ltd.,) was used.

The pigment dispersion is a self-dispersible pigment dispersion (CAB-O-JET-300, manufactured by Cabot Corporation). In this self-dispersible pigment dispersion, a pigment having a functional group on the surface is dispersed in water. The content of the pigment (solid content) in the pigment dispersion is 15 wt%. In the following Table 1, the amount of the pigment dispersion containing water and the pigment is shown.

Table 1

| No. | Pigment dispersion | Pure water | Viscosity adjusting agent | | Surfactant | LM pectin |
|-----|--------------------|------------|------|------|------------|-----------|
| | | | VC1 | VC2 | | |
| 1 | 20 | 31.5 | 24.25 | 24.25 | 1 | 0.025 |
| 2 | 20 | 31.5 | 24.25 | 24.25 | 1 | 0.05 |
| 3 | 20 | 31.5 | 24.25 | 24.25 | 1 | 0.1 |
| 4 | 20 | 31.5 | 24.25 | 24.25 | 1 | 0.15 |
| 5 | 20 | 31.5 | 24.25 | 24.25 | 1 | 0.2 |
| 6 | 20 | 31.5 | 24.25 | 24.25 | 1 | 0.25 |
| 7 | 33 | 18.5 | 24.25 | 24.25 | 1 | 0.025 |
| 8 | 28 | 24.5 | 24.25 | 24.25 | 1 | 0.025 |
| 9 | 20 | 31.5 | 24.25 | 24.25 | 1 | 0.31 |
| 10 | 20 | 31.5 | 24.25 | 24.25 | 1 | 0.02 |
| 11 | 20 | 31.5 | 24.25 | 24.25 | 1 | 0 |
| 12 | 40 | 11.5 | 24.25 | 24.25 | 1 | 0 |
| 13 | 34 | 17.5 | 24.25 | 24.25 | 1 | 0 |
| 14 | 33 | 18.5 | 24.25 | 24.25 | 1 | 0 |

The viscosity adjusting agents (VC1 and VC2) are the following compounds, respectively.

VC1: PEG 200 (manufactured by Sanyo Chemical Laboratory Co., Ltd.)

VC2: glycerin

Finally, the resulting mixture was filtered through a 1-$\mu$m membrane filter, whereby an aqueous pigment ink was obtained. In the following Table 2, the amounts of the LM pectin (wt%) in the aqueous pigment inks are summarized.

Table 2

| No. | LM pectin (wt%) |
|-----|-----------------|
| 1 | 0.025 |
| 2 | 0.049 |
| 3 | 0.099 |
| 4 | 0.148 |
| 5 | 0.198 |
| 6 | 0.247 |
| 7 | 0.025 |
| 8 | 0.025 |

(continued)

| No. | LM pectin (wt%) |
|-----|-----------------|
| 9   | 0.306           |
| 10  | 0.020           |
| 11  | 0               |
| 12  | 0               |
| 13  | 0               |
| 14  | 0               |

The content of the pigment in each aqueous pigment ink is as shown in the following Table 3.

Table 3

| No. | Pigment (wt%) |
|-----|---------------|
| 1   | 2.97          |
| 2   | 2.97          |
| 3   | 2.97          |
| 4   | 2.97          |
| 5   | 2.96          |
| 6   | 2.96          |
| 7   | 4.90          |
| 8   | 4.12          |
| 9   | 2.96          |
| 10  | 2.97          |
| 11  | 2.97          |
| 12  | 5.94          |
| 13  | 5.05          |
| 14  | 4.90          |

The viscosity of each of the obtained aqueous pigment inks was measured using a cone-plate type viscometer. As the viscometer, VISCOMETER TV-22 (manufactured by TOKI SANGYO CO., LTD.) was used. The viscosity of each of the aqueous pigment inks at 25°C was measured at a given rotation speed using a cone rotor (0.8° x R24) .

$V_A$ was obtained by performing the measurement at a rotation speed of 50 rpm and $V_B$ was obtained by performing the measurement at a rotation speed of 2.5 rpm.

Further, $V_C$ was obtained by performing the measurement at a rotation speed of 50 rpm after adding calcium chloride in an amount of 0.5 wt% of the aqueous pigment ink.

Then, $(V_B-V_A)/V_B$ and $V_C/V_A$ were calculated using the measurements ($V_A$, $V_B$, and $V_C$). The results are summarized in the following Table 4 along with the measurements.

Table 4

| No. | $V_A$ | $V_B$ | $(V_B-V_A)/V_B$ | $V_C$ | $V_C/V_A$ |
|-----|-------|-------|-----------------|-------|-----------|
| 1   | 9.88  | 10.12 | 0.024           | 14.9  | 1.51      |
| 2   | 9.96  | 10.2  | 0.024           | 20.5  | 2.06      |
| 3   | 10.35 | 10.7  | 0.033           | 25.4  | 2.45      |
| 4   | 10.85 | 11.33 | 0.042           | 32.5  | 3.00      |

(continued)

| No. | $V_A$ | $V_B$ | $(V_B-V_A)/V_B$ | $V_C$ | $V_C/V_A$ |
|---|---|---|---|---|---|
| 5 | 11.35 | 11.89 | 0.045 | 45.2 | 3.98 |
| 6 | 11.88 | 12.49 | 0.049 | 56 | 4.71 |
| 7 | 10.52 | 10.88 | 0.033 | 18 | 1.71 |
| 8 | 10.33 | 10.65 | 0.030 | 16.50 | 1.60 |
| 9 | 12.2 | 13.3 | 0.083 | 79 | 6.48 |
| 10 | 9.55 | 9.7 | 0.015 | 13.9 | 1.46 |
| 11 | 7.05 | 7.1 | 0.007 | 10.5 | 1.49 |
| 12 | 8.5 | 8.51 | 0.001 | 15.6 | 1.84 |
| 13 | 8.3 | 8.35 | 0.006 | 14.5 | 1.75 |
| 14 | 8.1 | 8.13 | 0.004 | 13.5 | 1.67 |

For the obtained aqueous pigment inks, ejection stability and image density were examined. The evaluation methods are as follows, respectively.

<Ejection Stability>

Using an inkjet recording apparatus provided with a CF1 head (model number) (manufactured by Toshiba Tec Corporation), continuous printing on plain paper was performed. As the plain paper, Toshiba Copy Paper was used. Immediately after printing, the presence or absence of an image defect or a faint image was examined by visual observation, and the ejection stability was determined based on the following criteria. Incidentally, A and B are at a level of no practical problem.

A: A faint image or other problem did not occur.
B: A faint image occurred at a level of no practical problem.
C: Ejection failure occurred at a level of no practical use.

<Image Density>

A solid image was formed on plain paper using the above-mentioned inkjet recording apparatus, and the density of the image was measured. In order to form one pixel, from one nozzle, three drops of 4 p1of the ink were continuously ejected and allowed to land on the same place. The solid image with an area of 1 cm$^2$ was formed at 600 dpi (dots per inch). As the plain paper, Toshiba Copy Paper was used. The obtained printed matter was left as such for 1 day, and thereafter, the image density was measured using a spectrodensitometer (manufactured by X-Rite Co., Ltd.). The evaluation criteria of the image density are as follows.

Good: The image density was 1.2 or more.
Bad: The image density was less than 1.2.

The obtained results are summarized in the following Table 5 along with the cost performance. The cost performance was evaluated based on the content of the pigment in the ink. When the content thereof was less than 5.0 wt%, the cost performance was evaluated as good, and when the content thereof was 5.0 wt% or more, the cost performance was evaluated as bad.

Table 5

| No. | Ejection stability | Image density | Cost performance |
|---|---|---|---|
| 1 | A | Good | Good |
| 2 | A | Good | Good |
| 3 | A | Good | Good |

(continued)

| No. | Ejection stability | Image density | Cost performance |
|---|---|---|---|
| 4 | A | Good | Good |
| 5 | B | Good | Good |
| 6 | B | Good | Good |
| 7 | A | Good | Good |
| 8 | A | Good | Good |
| 9 | C | Good | Good |
| 10 | A | Bad | Good |
| 11 | A | Bad | Good |
| 12 | A | Good | Bad |
| 13 | A | Good | Bad |
| 14 | A | Bad | Good |

Further, each aqueous pigment ink was stored in a thermostat chamber at 65°C, and the changing ratio of the viscosity after a lapse of one week was examined. The changing ratio of the viscosity of any of the inks was less than $\pm 10\%$, and it was confirmed that all the inks have favorable storage stability.

As shown in the above Table 5, the No. 9 ink is inferior in terms of ejection stability. As shown in the above Table 4, $(V_B-V_A)/V_B$ is as high as 0.083. It is shown in the above Table 2 that the content of the LM pectin in the No. 9 ink is too high.

The No. 10 ink is inferior in terms of image density. As shown in the above Table 4, the $V_C/V_A$ of the No. 10 ink is as low as 1.46. It is shown in the above Table 2 that the content of the LM pectin in the No. 10 ink is too low.

The Nos. 11 to 14 inks cannot get a good grade for both evaluation items of image density and cost performance at the same time. As shown in the above Table 2, any of the Nos. 11 to 14 inks does not contain an LM pectin. It is shown in the above Table 3 that the content of the pigment in the Nos. 12 and 13 inks exceeds 5.0 wt%.

The $(V_B-V_A)/V_B$ of each of the Nos. 1 to 8 aqueous pigment inks is less than 0.05, and $V_C/V_A$ is 1.5 or more. Since a predetermined amount of an LM pectin is contained as the water-soluble polymeric compound therein, the requirement of the viscosity could be satisfied. Further, in the Nos. 1 to 8 inks, the content of the pigment is less than 5 wt%.

Since all the requirements are satisfied, aqueous pigment inks having excellent ejection stability and also having high cost performance could be obtained. Moreover, these inks can form a high quality image on a paper medium.

The aqueous pigment ink according to the embodiment of the invention can be obtained at a low cost, has excellent ejection stability, and can form an image having a sufficient density on a paper medium.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. An aqueous pigment ink **characterized by** comprising:

water;
a pigment in an amount of less than 5 wt% of the aqueous pigment ink; and
a water-soluble polymeric compound,
the aqueous pigment ink having viscosities (mPa·s) measured at 25°C using a cone-plate type viscometer and satisfying the following relationships:

$$0 \leq (V_B-V_A)/V_B < 0.05$$

$$V_C/V_A \geq 1.5$$

$$3 \text{ mPa·s} \leq V_A \leq 15 \text{ mPa·s}$$

wherein $V_A$ represents a viscosity measured at a rotation speed of 50 rpm, $V_B$ represents a viscosity measured at a rotation speed of 2.5 rpm, and $V_C$ represents a viscosity measured at a rotation speed of 50 rpm after adding calcium chloride in an amount of 0.5 wt% of the aqueous pigment ink.

2. The ink according to claim 1, **characterized in that** the $(V_B-V_A)/V_B$ is 0.042 or less.

3. The ink according to claim 1 or 2, **characterized in that** the $V_C/V_A$ is 2 or more.

4. The ink according to any one of the preceding claims, **characterized in that** the $V_C/V_A$ is 20 or less.

5. The ink according to any one of the preceding claims, **characterized in that** the water-soluble polymeric compound is a pectin.

6. The ink according to claim 5, **characterized in that** the pectin has a degree of esterification of less than 50%.

7. An aqueous pigment ink **characterized by** comprising:

    water;
    a pigment in an amount of less than 5 wt% of the aqueous pigment ink; and
    a low methoxyl pectin in an amount of more than 0.02 wt% but less than 0.3 wt% of the aqueous pigment ink,
    the aqueous pigment ink having a viscosity measured at 25°C using a cone-plate type viscometer and ranging from 3 to 15 mPa·s.

8. The ink according to claim 7, **characterized in that** the low methoxyl pectin is comprised in an amount of less than 0.2 wt% of the aqueous pigment ink.

9. The ink according to claim 8, **characterized in that** the low methoxyl pectin is comprised in an amount of less than 0.15 wt% of the aqueous pigment ink.

10. The ink according to any one of the preceding claims, **characterized in that** the pigment is a self-dispersible pigment.

11. The ink according to any one of the preceding claims, **characterized in that** the pigment is comprised in an amount of less than 3 wt% of the aqueous pigment ink.

12. The ink according to any one of the preceding claims, **characterized in that** the pigment is comprised in an amount of 1.5 wt% or more of the aqueous pigment ink.

13. The ink according to any one of the preceding claims, **characterized by** further comprising a viscosity adjusting agent.

14. The ink according to claim 13, **characterized in that** the viscosity adjusting agent is selected from the group consisting of glycerin, polyethylene glycol, and glycol ether.

| | Europäisches Patentamt |
|---|---|
| | European Patent Office |
| | Office européen des brevets |

**EUROPEAN SEARCH REPORT**

Application Number

EP 11 15 8690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2009/195571 A1 (SHIMADA KOU [JP])<br>6 August 2009 (2009-08-06)<br>* paragraphs [0016], [0032]; table 1 *<br>----- | 1-6,<br>10-14<br>7-9 | INV.<br>C09D11/00 |
| X<br>A | EP 0 838 508 A2 (SEIKO EPSON CORP [JP])<br>29 April 1998 (1998-04-29)<br>* page 5, lines 21,52-57 *<br>* page 6, lines 3,18; example 6 *<br>----- | 1-6,<br>10-14<br>7-9 | |
| X | EP 2 036 960 A1 (DAINIPPON INK & CHEMICALS [JP]) 18 March 2009 (2009-03-18)<br>* examples *<br>----- | 1 | |
| X | EP 1 038 929 A1 (SEIKO EPSON CORP [JP])<br>27 September 2000 (2000-09-27)<br>* paragraph [0035]; claim 4 *<br>----- | 1 | |

| TECHNICAL FIELDS SEARCHED (IPC) |
|---|
| C09D |

The present search report has been drawn up for all claims

| Place of search | Date of completion of the search | Examiner |
|---|---|---|
| Munich | 13 July 2011 | Ellrich, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 15 8690

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2011

| Patent document cited in search report | | Publication date | Patent family member(s) | | Publication date |
|---|---|---|---|---|---|
| US 2009195571 | A1 | 06-08-2009 | JP | 2009209360 A | 17-09-2009 |
| EP 0838508 | A2 | 29-04-1998 | DE | 69706389 D1 | 04-10-2001 |
| | | | DE | 69706389 T2 | 14-02-2002 |
| | | | JP | 3121290 B2 | 25-12-2000 |
| | | | JP | 10183043 A | 07-07-1998 |
| | | | US | 5871572 A | 16-02-1999 |
| EP 2036960 | A1 | 18-03-2009 | CA | 2657818 A1 | 03-01-2008 |
| | | | WO | 2008001762 A1 | 03-01-2008 |
| | | | KR | 20090025192 A | 10-03-2009 |
| | | | US | 2009326127 A1 | 31-12-2009 |
| EP 1038929 | A1 | 27-09-2000 | AT | 244743 T | 15-07-2003 |
| | | | DE | 60003737 D1 | 14-08-2003 |
| | | | DE | 60003737 T2 | 05-02-2004 |
| | | | JP | 3565104 B2 | 15-09-2004 |
| | | | JP | 2000336293 A | 05-12-2000 |
| | | | US | 6231655 B1 | 15-05-2001 |

EPO FORM P0459

For more details about this annex : see Official Journal of the European Patent Office, No. 12/82